# EUROPÄISCHE PATENTANMELDUNG

(11) **EP 3 700 068 A1**
(43) Veröffentlichungstag der Anmeldung: **26.08.2020**
(21) Anmeldenummer: 19158812.8
(22) Anmeldetag: 22.02.2019
(51) Int. Cl.: H02K 7/11, H02K 7/116, H02K 16/02

(54) **ELEKTRISCHE MASCHINE**

(71) Anmelder: Siemens Aktiengesellschaft, 80333 München (DE)
(72) Erfinder: Vollmer, Rolf, 36129 Gersfeld (DE)

(57) **Zusammenfassung**

Um eine hohe Drehmomentdichte zu erzielen wird eine elektrische Maschine angegeben, die einen Stator (1) aufweist, welcher Statorwicklungen (6) trägt. Die elektrische Maschine weist außerdem einen ersten Rotor (2) und einen zweiten Rotor (4) auf, die um die Rotorachse (16) drehbar gelagert sind, wobei der zweite Rotor (4) radial zwischen dem ersten Rotor (2) und dem Stator (1) angeordnet ist. Einer der beiden Rotoren (2, 4) trägt wenigstens zwei Permanentmagneten (3), der andere trägt wenigstens ein weichmagnetisches Element (5). Die Maschine weist außerdem ein Getriebeelement (7) auf, welches den ersten Rotor (2) mit dem zweiten Rotor (4) verbindet.

## Beschreibung

Die Erfindung betrifft eine elektrische Maschine mit einem Stator, welcher Statorwicklungen trägt, und mit einem ersten Rotor, der um eine Rotorachse drehbar gelagert ist.

Elektrische Maschinen können beispielsweise elektrische Energie in mechanische Energie umwandeln oder umgekehrt. Bei der Umwandlung von elektrischer Energie in mechanische Energie kann beispielsweise eine Kombination aus einem Motor und einem Getriebe eingesetzt werden. Bei bekannten Motor-Getriebe-Kombinationen sind ein Elektromotor und ein Getriebe in Reihe geschaltet. Eine von dem Elektromotor erzeugte mechanische Energie wird in das Getriebe eingeleitet, um beispielsweise aus einer Bewegung mit hoher Drehzahl und geringem Drehmoment eine Bewegung mit geringerer Drehzahl und höherem Drehmoment zu erzeugen.

Es kann wünschenswert sein, eine besonders hohe Drehmomentdichte, also Abtriebsdrehmoment pro Bauraumvolumen der elektrischen Maschine, zu erzielen.

Vor diesem Hintergrund ist es eine Aufgabe der vorliegenden Erfindung, ein verbessertes Konzept für eine elektrische Maschine anzugeben, bei der eine erzielbare Drehmomentdichte erhöht ist.

Das verbesserte Konzept beruht auf der Idee, eine elektrische Maschine mit einem Stator und zwei Rotoren anzugeben, wobei die Rotoren und der Stator bezüglich einer Rotorachse radial aufeinanderfolgend angeordnet sind und die beiden Rotoren mittels eines Getriebeelements miteinander verbunden sind. Die beiden Rotoren sind dabei derart ausgestaltet, dass ein Wechselstrom in Statorwicklungen beide Rotoren in Bewegung versetzt, sodass sich entsprechende Drehmomente am Abtrieb effektiv addieren.

Gemäß dem verbesserten Konzept wird eine elektrische Maschine angegeben, die einen Stator aufweist, welcher Statorwicklungen trägt. Die elektrische Maschine weist außerdem einen ersten Rotor auf, der um eine Rotorachse drehbar gelagert ist. Die Maschine weist zudem einen zweiten Rotor auf, der ebenfalls um die Rotorachse drehbar gelagert ist und bezüglich der Rotorachse radial zwischen dem ersten Rotor und dem Stator angeordnet ist. Einer der beiden Rotoren trägt wenigstens zwei Permanentmagneten, der andere der beiden Rotoren trägt wenigstens ein weichmagnetisches Element, welches mit den wenigstens zwei Permanentmagneten in magnetischer Wechselwirkung steht oder mit den wenigstens zwei Permanentmagneten magnetisch gekoppelt ist. Das heißt, der erste Rotor trägt wenigstens zwei Permanentmagneten und der zweite Rotor trägt wenigstens ein weichmagnetisches Element oder der erste Rotor trägt wenigstens ein weichmagnetisches Element und der zweite Rotor trägt wenigstens zwei Permanentmagneten. Die Maschine weist außerdem ein Getriebeelement auf, welches den ersten Rotor mit dem zweiten Rotor verbindet.

Insbesondere kann die elektrische Maschine eine Rotorwelle aufweisen, welche mit dem ersten Rotor verbunden ist und die drehbar um die Rotorachse gelagert ist. Insbesondere kann die Rotorwelle auf der Rotorachse liegen.

Das wenigstens eine weichmagnetische Element kann beispielsweise ein magnetisches Material mit einer Koerzitivfeldstärke beinhalten, die kleiner ist als 200 kA/m, insbesondere kleiner als 100 kA/m, oder aus einem solchen Material bestehen.

Dass das wenigstens eine weichmagnetische Element mit den wenigstens zwei Permanentmagneten in magnetischer Wechselwirkung steht oder magnetisch gekoppelt ist kann derart verstanden werden, dass, abhängig von jeweiligen Rotationspositionen der beiden Rotoren jedes weichmagnetische Element mit einem oder mehreren der wenigstens zwei Permanentmagnete magnetisch wechselwirken kann. Die magnetische Wechselwirkung oder Kopplung wird insbesondere durch eine Reluktanzkraft vermittelt. Die beiden Rotoren und der Stator sind insbesondere koaxial bezüglich der Rotorachse angeordnet und insbesondere für eine gegebene axiale Position radial aufeinanderfolgend angeordnet. Das heißt, ausgehend von der Rotorachse nach außen in radialer Richtung ist entweder zunächst der Stator, dann der zweite Rotor und dann der erste Rotor angeordnet oder radial von innen nach außen zunächst der erste Rotor, dann der zweite Rotor und dann der Stator.

Die elektrische Maschine ist insbesondere als elektrischer Motor oder als elektrischer Getriebemotor, also Kombination von Motor und Getriebe, ausgebildet.

Das Getriebeelement ist beispielsweise derart ausgestaltet und angeordnet, dass es bewirkt, dass sich der erste Rotor mit einer Drehzahl dreht, die kleiner oder gleich einer Drehzahl des zweiten Rotors ist beziehungsweise ein Drehmoment liefert, das größer oder gleich einem Drehmoment des zweiten Rotors ist.

Insbesondere drehen sich durch das Getriebeelement im Betrieb der elektrischen Maschine der erste Rotor und der zweite Rotor in entgegengesetzte Rotationsrichtungen.

Durch eine Anordnung der Rotoren und des Stators in einer elektrischen Maschine nach dem verbesserten Konzept werden die Drehmomente der Rotoren effektiv derart addiert, dass am Abtrieb, also beispielsweise an der Rotorwelle, die Summe beider Drehmomente wirkt. Es ist damit ein hohes Drehmoment erzielbar, ohne dass ein Motor und ein separates Getriebe, insbesondere in Reihe zueinander, vorgesehen werden müssen. Dementsprechend ist ein Aufbau nach dem verbesserten Konzept kompakter als beispielsweise eine Reihenschaltung aus einem konventionellen Motor und einem konventionellen Getriebe oder als ein konventioneller Getriebemotor. Eine sich daraus ergebende Drehmomentdichte, also ein erzielbares Drehmoment pro Bauraumvolumen der elektrischen Maschine, bei gegebener Leistung ist damit erhöht. Der geringe Bauraum und die entsprechende hohe Drehmomentdichte sind insbesondere durch die radiale Anordnung der beiden Rotoren und des Stators zueinander und die Kopplung über das Getriebeelement möglich.

Eine elektrische Maschine nach dem verbesserten Konzept weist also insbesondere ein magnetomechanisches Getriebe auf, welches durch die magnetische Kopplung der beiden Rotoren über die Permanentmagnete und weichmagnetischen Elemente einerseits sowie das über das Getriebeelement andererseits gebildet wird.

Durch eine Anordnung wie einer elektrischen Maschine nach dem verbesserten Konzept ist eine Einzeldrehzahl jedes Rotors bei gleicher Leistung reduziert. Die Leistung "steckt" gewissermaßen in einem Luftspalt zwischen den entgegengesetzt laufenden Rotoren, die aufgrund der Gegenläufigkeit eine sehr hohe Relativgeschwindigkeit zueinander haben.

Durch die reduzierte Drehzahl der einzelnen Rotoren sind geringere Anforderungen an eine Festigkeit der jeweiligen Rotoren und eine Lagerung der jeweiligen Rotoren möglich.

Gemäß zumindest einer Ausführungsform beinhalten die wenigstens zwei Permanentmagneten jeweils ein hartmagnetisches Material, insbesondere ein magnetisches Material mit einer Koerzitivfeldstärke, die größer ist als 200 kA/m.

Gemäß zumindest einer Ausführungsform der elektrischen Maschine ist das wenigstens eine weichmagnetische Element geblecht ausgeführt.

Insbesondere weist das wenigstens eine weichmagnetische Element einen Stapel aus voneinander elektrisch isolierten Elektroblechen auf.

Gemäß zumindest einer Ausführungsform trägt der erste Rotor die wenigstens zwei Permanentmagneten und der zweite Rotor das wenigstens eine weichmagnetische Element.

Gemäß zumindest einer Ausführungsform ist der Stator radial von der Rotorachse weiter entfernt angeordnet als der erste Rotor und weiter entfernt angeordnet als der zweite Rotor.

Mit anderen Worten ist die elektrische Maschine als innenlaufender Motor oder innenlaufender Getriebemotor oder Innenläufer ausgebildet.

Gemäß zumindest einer Ausgestaltungsform ist der Stator radial von der Rotorachse weniger weit entfernt angeordnet als der erste Rotor und weniger weit entfernt angeordnet als der zweite Rotor.

Mit anderen Worten ist die elektrische Maschine als außenlaufender Motor oder als außenlaufender Getriebemotor oder als Außenläufer ausgebildet.

Insbesondere bei einer Ausbildung der elektrischen Maschine als Außenläufer kann eine mit dem ersten Rotor verbundene Rotorwelle als Hohlwelle ausgebildet sein. Mit Vorteil können weitere Komponenten der elektrischen Maschine im Inneren der Hohlwelle angeordnet sein, insbesondere der zweite Rotor, der Stator oder das Getriebeelement. Dadurch kann ein noch kompakterer Aufbau erzielt werden

Gemäß zumindest einer Ausführungsform ist das Getriebeelement derart ausgestaltet, dass es eine Rotation des zweiten Rotors in eine Rotation des ersten Rotors übersetzt, wobei eine Drehzahl des ersten Rotors kleiner oder gleich einer Drehzahl des zweiten Rotors ist.

Man kann in diesem Zusammenhang also von einer Untersetzung oder einer Übersetzung ins Langsame vom zweiten zum ersten Rotor sprechen.

Die Drehmomente der beiden Rotoren addieren sich insbesondere. Dementsprechend liegt auch bei einem Übersetzungsverhältnis von 1:1 ein gegenüber einer einzelnen Rotorbewegung erhöhtes Abtriebsdrehmoment vor.

Es ist allerdings auch eine stärkere Übersetzung ins Langsame von dem zweiten Rotor zum ersten Rotor möglich. Entsprechend kann ein Abtriebsdrehmoment weiter erhöht werden.

Gemäß zumindest einer Ausführungsform besteht das Getriebeelement aus einem Zahnrad und gegebenenfalls aus Befestigungsmitteln. Insbesondere erfolgt eine Übersetzung zwischen erstem und zweitem Rotor mittels eines einzigen Zahnrads.

Eine solche Ausführungsform ist besonders einfach aufgebaut, besonders wenig wartungsaufwendig und besonders wenig fehleranfällig. Hier ist insbesondere eine Übersetzung zwischen erstem und zweitem Rotor von 1:1 möglich.

Gemäß zumindest einer Ausführungsform weist das Getriebeelement ein Zahnradgetriebe mit mindestens zwei Zahnrädern auf.

Gemäß zumindest einer Ausführungsform weist das Getriebeelement ein Wälzkörpergetriebe, beispielsweise ein Reibradgetriebe, auf.

Mittels eines Zahnrad- oder Wälzkörpergetriebes ist insbesondere eine Übersetzung ins Langsame von dem zweiten Rotor zum ersten Rotor möglich.

Gemäß zumindest einer Ausführungsform erzeugen die wenigstens zwei Permanentmagnete Magnetfelder, welche in einer Richtung tangential um die Rotorachse herum alternierend auf die Rotorachse zu und von der Rotorachse weg gerichtet sind.

Hier kann hin- beziehungsweise weg gerichtet beispielsweise als jeweilige Richtung der entsprechenden Magnetfeldlinien verstanden werden, welche beispielsweise als von einem Nordpol eines Magneten oder eines der Permanentmagneten in Richtung eines Südpols zeigend definiert sein können.

Soweit hier und im Folgenden die Begriffe axial, radial oder tangential verwendet werden, sind diese stets auf die Rotorachse bezogen. Axial ist dabei eine Richtung parallel zur Rotorachse. Radial ist eine Richtung orthogonal zur Rotorachse auf die Rotorachse zu oder von der Rotorachse weg zeigend. Tangential ist eine Richtung, die sowohl zu jeder Axialrichtung als auch zu jeder Radialrichtung orthogonal ist. Tangential ist also eine Richtung, die in konstantem Radialabstand und bei konstanter Axialposition kreisförmig um die Rotorachse herum gerichtet ist.

Gemäß zumindest einer Ausführungsform beinhalten die wenigstens zwei Permanentmagnete eine Anzahl von Permanentmagneten, wobei die Anzahl eine gerade Zahl ist und insbesondere dem doppelten einer magnetischen Polpaarzahl entspricht. Dementsprechend beinhalten die wenigstens zwei Permanentmagnete Polpaare von einer magnetischen Polpaarzahl.

Gemäß zumindest einer Ausführungsform sind die wenigstens zwei Permanentmagnete in einer Richtung tangential um die Rotorachse herum alternierend radial magnetisiert.

Gemäß zumindest einer Ausführungsform weist die elektrische Maschine Flussführungselemente auf, die von den wenigstens zwei Permanentmagneten ausgehenden Magnetfelder derart umlenken, dass die umgelenkten Magnetfelder in einer Richtung tangential um die Rotorachse herum alternierend auf die Rotorachse zu und von der Rotorachse weg gerichtet, insbesondere radial gerichtet, sind.

Gemäß zumindest einer Ausführungsform sind die wenigstens zwei Permanentmagnete in einer Richtung tangential um die Rotorachse herum alternierend tangential zur Rotorachse magnetisiert, wobei in solchen Ausführungsformen die elektrische Maschine die Flussführungselemente aufweist.

Gemäß zumindest einer Ausführungsform ist zwischen jeweiligen benachbarten Permanentmagneten der wenigstens zwei Permanentmagnete, insbesondere der um die Rotorachse herum tangential alternierend tangential magnetisierenden Permanentmagnete, jeweils ein Flussführungselement angeordnet.

Die resultierenden Magnetfelder werden also entweder von den Permanentmagneten oder von den Permanentmagneten zusammen mit den Flussführungselementen derart erzeugt und/oder umgelenkt, dass die Magnetfelder in einer Richtung tangential um die Rotorachse herum alternierend auf die Rotorachse zu und von der Rotorachse weg gerichtet sind.

Gemäß zumindest einer Ausführungsform weist das wenigstens eine weichmagnetische Element eine Anzahl von weichmagnetischen Elementen auf, welche tangential um die Rotorachse herum gleichmäßig verteilt sind.

Die Anzahl von weichmagnetischen Elementen kann auch zusammenhängende weichmagnetische Elemente aufweisen. Insbesondere können auch alle der Anzahl von weichmagnetischen Elementen zusammenhängen.

Dass die magnetischen Elemente voneinander unterscheidbar und verteilt sind kann implizieren, dass Abstände zwischen den einzelnen weichmagnetischen Elementen vorhanden sind. Dies bedeutet insbesondere nicht zwingend, dass an jeder axialen Position solche Abstände vorhanden sind oder die Elemente vollständig voneinander getrennt sind.

Gemäß zumindest einer Ausführungsform sind die Statorwicklungen derart ausgebildet, dass sich eine Anzahl von elektrischen Polpaaren ausbildet, insbesondere eine Anzahl, die einer elektrischen Polpaarzahl entspricht.

Gemäß zumindest einer Ausführungsform weisen die wenigstens zwei Permanentmagnete eine magnetische Polpaarzahl auf.

Gemäß zumindest einer Ausführungsform ist die Anzahl von weichmagnetischen Elementen gleich einer Summe der elektrischen und der magnetischen Polpaarzahl.

Gemäß einer weiteren Ausführungsform ist die Anzahl von weichmagnetischen Elementen gleich einer Differenz zwischen der elektrischen und der magnetischen Polpaarzahl.

Gemäß zumindest einer Ausführungsform befindet sich zwischen zwei Benachbarten der weichmagnetischen Elemente, insbesondere zwischen allen Paaren benachbarter weichmagnetischer Elemente, ein jeweiliger nicht-magnetischer Bereich.

Die nicht-magnetischen Bereiche sind insbesondere elektrisch isolierend oder im Wesentlichen elektrisch isolierend.

Gemäß zumindest einer Ausführungsform enthält der nicht-magnetische Bereich, insbesondere enthalten alle nicht-magnetischen Bereiche, Luft, ein Keramikmaterial oder einen Kunststoff.

Gemäß dem verbesserten Konzept wird auch ein elektrischer Motor, insbesondere ein elektrischer Getriebemotor, angegeben, welcher eine elektrische Maschine nach dem verbesserten Konzept oder einer Ausgestaltungsform enthält.

Die Erfindung wird im Folgenden anhand konkreter Ausführungsbeispiele und zugehöriger schematischer Zeichnungen näher erläutert. In den Figuren sind gleiche oder funktionsgleiche Elemente mit gleichen Bezugszeichen versehen. Die Beschreibung gleicher oder funktionsgleicher Elemente wird gegebenenfalls nicht notwendigerweise in verschiedenen Figuren wiederholt.

In den Zeichnungen zeigen:
- FIG 1: eine schematische Schnittdarstellung einer beispielhaften Ausführungsform einer elektrischen Maschine nach dem verbesserten Konzept;
- FIG 2: eine schematische Schnittdarstellung einer weiteren beispielhaften Ausführungsform einer elektrischen Maschine nach dem verbesserten Konzept;
- FIG 3: einen Rotor, wie er in verschiedenen Ausgestaltungsformen einer elektrischen Maschine nach dem verbesserten Konzept eingesetzt werden kann; und
- FIG 4: eine schematische Schnittdarstellung einer weiteren beispielhaften Ausführungsform einer elektrischen Maschine nach dem verbesserten Konzept.

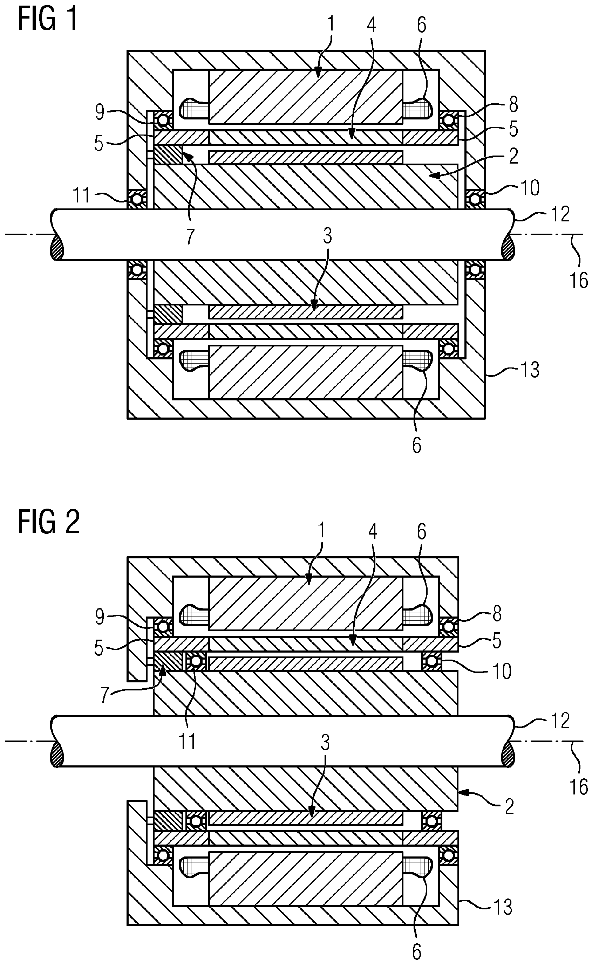

In FIG 1 ist eine beispielhafte Längsschnittdarstellung durch eine beispielhafte Ausführungsform eines elektrischen Motors, insbesondere Getriebemotors, oder einer elektrischen Maschine nach dem verbesserten Konzept gezeigt.

Die elektrische Maschine weist einen Stator 1 auf, an welchem elektrische Wicklungen 6, insbesondere Statorwicklungen 6, angeordnet sind. Die elektrische Maschine weist außerdem einen ersten Rotor 2 auf, welcher im gezeigten Beispiel wenigstens zwei Permanentmagnete 3 trägt. Eine Rotorachse 16 oder Rotationsachse des ersten Rotors 2 ist ebenfalls gezeigt. Der Stator 1 und der erste Rotor 2 sind koaxial bezüglich der Rotorachse 16 angeordnet. Die Schnittdarstellung der FIG 1 zeigt insbesondere einen Schnitt durch die Rotorachse 16.

Der erste Rotor 2 ist beispielsweise mit einer Rotorwelle 12 verbunden, wobei eine Symmetrie- oder Längsachse der Rotorwelle 12 der Rotorachse 16 entspricht. Die Rotorwelle 12 ist mit Lagern 10, 11 drehbar auf einem Gestell 13 der elektrischen Maschine gelagert.

Die elektrische Maschine weist außerdem einen zweiten Rotor 4 auf, der im gezeigten Beispiel wenigstens ein weichmagnetisches Element 5, auch als Eisenreaktionselemente bezeichnet, trägt. Der zweite Rotor 4 ist radial ausgehend von der Rotorachse 16 zwischen dem ersten Rotor 2 und dem Stator 1 angeordnet. Der zweite Rotor 4 ist ebenfalls drehbar um die Rotorachse 16 gelagert, insbesondere mit Lagern 8, 9 auf dem Gestell 13 gelagert.

Die elektrische Maschine weist außerdem ein Getriebeelement 7 auf, welches im Beispiel der FIG 1 beispielsweise aus einem Zahnrad, welches optional mit dem Gestell 13 verbunden sein kann, besteht. Das Getriebeelement 7 verbindet den ersten Rotor mit dem zweiten Rotor.

Im Betrieb der elektrischen Maschine erzeugt die Statorwicklung 6 ein magnetisches Drehfeld, was zum einen den ersten Rotor 2 über die Permanentmagnete 3 in Bewegung versetzt. Über die magnetische Kopplung der weichmagnetischen Elemente 5 mit dem durch die Permanentmagnete 3 erzeugten Magnetfeld und über die mechanische Kopplung der beiden Rotoren durch das Getriebeelement 7 wird auch der zweite Rotor 4 in Rotationsbewegung versetzt. Dabei rotieren die beiden Rotoren gegenläufig zueinander.

Die elektrische Maschine wandelt also elektrische Energie in mechanische Energie um, welche insbesondere an der Rotorwelle 12 ausgeleitet werden kann.

Die Statorwicklungen 6 können beispielsweise mehrphasig ausgebildet sein, beispielsweise dreiphasig.

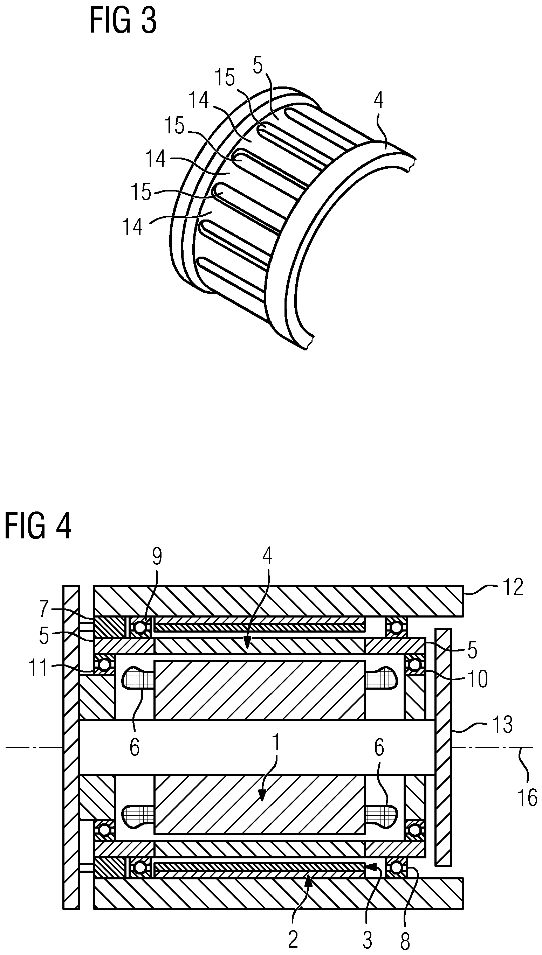

Eine mögliche Ausgestaltung des zweiten Rotors 4 und der weichmagnetischen Elemente 5 ist in FIG 3 gezeigt. Das wenigstens eine weichmagnetische Element 5 ist dabei als zusammenhängende Hülse ausgebildet, wobei einzelne Elemente 14 speichenförmig entlang einer jeweiligen Richtung parallel zur Rotorachse 16 ausgerichtet und gleichmäßig tangential um die Rotorachse 16 herum angeordnet sind. Zwischen den Speichen befinden sich jeweils Luftspalte 15, welche jeweils nichtmagnetische Bereiche zwischen benachbarten weichmagnetischen Elementen 14 darstellen. In alternativen Ausführungsformen können statt Luftspalten 15 auch mit einem anderen nicht-magnetischen Material gefüllte Bereiche vorgesehen sein, beispielsweise mit einem Kunststoff oder einer Keramik gefüllte Bereiche.

In FIG 2 ist eine weitere beispielhafte Ausführungsform einer elektrischen Maschine gemäß dem verbesserten Konzept dargestellt. Die Ausführungsform stimmt weitgehend mit derjenigen überein, die bezüglich FIG 1 erläutert wurde. Daher wird hier lediglich auf die Unterschiede eingegangen. Die Lager 10, 11, mit denen der erste Rotor 2 an dem Gestell 13 gelagert ist, sind in FIG 2 axial zwischen den Permanentmagneten 3 und dem Getriebeelement 7 angeordnet. In der Ausführungsform von FIG 1 war dagegen das Getriebeelement 7 axial zwischen den Lagern 11 und den Permanentmagneten 3 angeordnet. Beide Varianten stellen lediglich konstruktive Ausgestaltungsformen dar, die in jeweiligen konkreten Anwendungsgebieten und Anwendungsfällen jeweils vorteilhaft sein können. Insbesondere ist eine solche Anordnung nicht notwendigerweise mit anderen Aspekten der einzelnen Ausführungsformen in den FIG 1 beziehungsweise FIG 2 gekoppelt.

In der Ausführungsform von FIG 2 enthält das Getriebeelement 7 ein Zahnrad- oder Wälzkörpergetriebe, welches eine derartige Übersetzung der Rotationsbewegung des zweiten Rotors 4 in eine Rotationsbewegung des ersten Rotors 2 bewirkt, dass eine resultierende Drehzahl des ersten Rotors 2 geringer ist als eine Drehzahl des zweiten Rotors 4. Dementsprechend kann mit einer elektrischen Maschine nach FIG 2 ein noch höheres Drehmoment an der Rotorwelle 12 ausgeleitet werden.

In FIG 4 ist eine weitere beispielhafte Ausführungsform einer elektrischen Maschine nach dem verbesserten Konzept gezeigt. Während die elektrischen Maschinen in FIG 1 und FIG 2 als Innenläufer konstruiert waren, ist in FIG 4 eine Variante der Maschine gezeigt, die als Außenläufer konstruiert ist.

In FIG 1 und FIG 2 befand sich der erste Rotor 2 radial am nächsten an der Rotorachse 16 gefolgt von dem zweiten Rotor 4 und schließlich dem am weitesten von der Rotorachse entfernten Stator 1. In FIG 4 dagegen befindet sich der Stator 1 am nächsten an der Rotorachse 16, gefolgt von dem zweiten Rotor 4 und schließlich von dem ersten Rotor 2, welcher in diesem Fall radial am weitesten entfernt von der Rotorachse 16 angeordnet ist. Das Getriebeelement 7 in FIG 4 ist analog zu den Ausgestaltungsformen ausgebildet, die bezüglich FIG 1 oder FIG 2 erläutert wurden, also insbesondere als Zahnrad, Zahnrad- oder Wälzkörpergetriebe.

Das Gestell 13 ist gemäß FIG 4 angepasst an eine Außenläuferkonstruktion der elektrischen Maschine, insbesondere weist es beispielsweise eine feste Statorwelle auf.

Die Rotorwelle 12 ist in dem Beispiel der FIG 4 radial außerhalb des ersten Rotors angeordnet und insbesondere als Hohlwelle ausgebildet. Insbesondere befinden sich die beiden Rotoren 2, 4, die Statorwicklungen 6, die weichmagnetischen Elemente 5, die Permanentmagnete 3 und/oder das Getriebeelement 7 radial innerhalb der Hohlwelle.

Mit einem Außenläufer, wie er in FIG 4 gezeigt ist, sind ein besonders kompakter Aufbau und eine entsprechend besonders hohe Drehmomentdichte erreichbar.

Durch den Aufbau einer elektrischen Maschine nach dem verbesserten Konzept mit koaxial angeordneten Rotoren und einem ebenfalls koaxial angeordneten Stator ist in Verbindung mit dem magnetomechanischen Getriebe zwischen den beiden Rotoren und der daraus resultierenden erhöhten Relativgeschwindigkeit der beiden Rotoren zueinander eine besonders hohe Drehmomentdichte und ein besonders kompakter Aufbau der elektrischen Maschine möglich.

## Patentansprüche

1. Elektrische Maschine, aufweisend
- einen Stator (1), welcher Statorwicklungen (6) trägt; und
- einen ersten Rotor (2), der um eine Rotorachse (16) drehbar gelagert ist;
**dadurch gekennzeichnet, dass**
- die Maschine einen zweiten Rotor (4) aufweist, der um die Rotorachse (16) drehbar gelagert ist und bezüglich der Rotorachse (16) radial zwischen dem ersten Rotor (2) und dem Stator (1) angeordnet ist;
- einer der beiden Rotoren (2, 4) wenigstens zwei Permanentmagneten (3) trägt; und
- der andere der beiden Rotoren (2, 4) wenigstens ein weichmagnetisches Element (5) trägt, welches mit den wenigstens zwei Permanentmagneten in magnetischer Wechselwirkung steht; und
- die Maschine ein Getriebeelement (7) aufweist, welches den ersten Rotor (2) und den zweiten Rotor (4) miteinander verbindet.

2. Elektrische Maschine nach Anspruch 1, die eine mit dem ersten Rotor (2) verbundene Rotorwelle (12) zum Ausleiten von durch die Maschine erzeugter mechanischer Energie aufweist.

3. Elektrische Maschine nach einem der Ansprüche 1 oder 2, wobei der Stator (1) radial von der Rotorachse (16) weiter entfernt angeordnet ist als der erste und der zweite Rotor (2, 4).

4. Elektrische Maschine nach einem der Ansprüche 1 oder 2, wobei der Stator (1) radial von der Rotorachse (16) weniger weit entfernt angeordnet ist als der erste und der zweite Rotor (2, 4).

5. Elektrische Maschine nach einem der Ansprüche 1 bis 4, wobei das Getriebeelement (7) derart ausgestaltet ist, dass es eine Rotation des zweiten Rotors (4) in eine Rotation des ersten Rotors (2) übersetzt, wobei eine Drehzahl des ersten Rotors (2) kleiner oder gleich einer Drehzahl des zweiten Rotors (4) ist.

6. Elektrische Maschine nach Anspruch 5, wobei das Getriebeelement (7) aus einem Zahnrad besteht.

7. Elektrische Maschine nach Anspruch 5, wobei das Getriebeelement (7) ein Zahnradgetriebe mit mindestens zwei Zahnrädern oder ein Wälzkörpergetriebe beinhaltet.

8. Elektrische Maschine nach einem der Ansprüche 1 bis 7, wobei die wenigstens zwei Permanentmagneten (3) Magnetfelder erzeugen, welche tangential um die Rotorachse (16) herum alternierend auf die Rotorachse (16) zu und von der Rotorachse (16) weg gerichtet sind.

9. Elektrische Maschine nach Anspruch 8, wobei die wenigstens zwei Permanentmagnete (3) tangential um die Rotorachse (16) herum alternierend radial magnetisiert sind.

10. Elektrische Maschine nach einem der Ansprüche 1 bis 7, wobei die elektrische Maschine Flussführungselemente aufweist, die von den wenigstens zwei Permanentmagneten (3) ausgehende Magnetfelder derart umlenken, dass die umgelenkten Magnetfelder tangential um die Rotorachse (16) herum alternierend auf die Rotorachse (16) zu und von der Rotorachse (16) weg gerichtet sind.

11. Elektrische Maschine nach einem der Ansprüche 1 bis 10, wobei das wenigstens eine weichmagnetische Element (5) eine Anzahl von weichmagnetischen Elementen (14) aufweist, die tangential um die Rotorachse (16) herum gleichmäßig verteilt sind.

12. Elektrische Maschine nach Anspruch 11, wobei
- die Statorwicklungen (6) eine elektrische Polpaarzahl aufweisen;
- die wenigstens zwei Permanentmagneten (3) eine magnetische Polpaarzahl aufweisen; und
- die Anzahl von weichmagnetischen Elementen (14) gleich einer Summe oder einer Differenz der elektrischen und der magnetischen Polpaarzahl.

13. Elektrische Maschine nach einem der Ansprüche 11 oder 12, wobei sich zwischen zwei benachbarten der weichmagnetischen Elemente (14) ein nichtmagnetischer Bereich (15) befindet.

14. Elektrische Maschine nach Anspruch 13, wobei der nichtmagnetische Bereich (15) Luft, ein Keramikmaterial oder einen Kunststoff enthält.

15. Elektrischer Getriebemotor, welcher eine elektrische Maschine nach einem der Ansprüche 1 bis 14 aufweist.
